Europäisches Patentamt

European Patent Office

Office européen des brevets

(11) Veröffentlichungsnummer: **0 214 455**
**B1**

(12) # EUROPÄISCHE PATENTSCHRIFT

(45) Veröffentlichungstag der Patentschrift:
**25.10.89**

(51) Int. Cl.⁴: **A01G 3/04**, F16P 3/20

(21) Anmeldenummer: **86110678.9**

(22) Anmeldetag: **01.08.86**

(54) **Motorisch betriebenes Handgerät.**

(30) Priorität: **30.08.85 DE 3531059**

(43) Veröffentlichungstag der Anmeldung:
**18.03.87 Patentblatt 87/12**

(45) Bekanntmachung des Hinweises auf die Patenterteilung:
**25.10.89 Patentblatt 89/43**

(84) Benannte Vertragsstaaten:
**AT DE FR GB IT NL**

(56) Entgegenhaltungen:
**DE-A- 2 839 002**
**DE-A- 2 840 886**
**FR-A- 2 558 567**

(73) Patentinhaber: **GARDENA Kress + Kastner GmbH,
Lichternseestrasse 40 Postfach 27 47, D-7900 Ulm
(Donau)(DE)**

(72) Die Erfinder haben auf ihre Nennung verzichtet

(74) Vertreter: **Patentanwälte Ruff und Beier,
Neckarstrasse 50, D-7000 Stuttgart 1(DE)**

**Beschreibung**

Die Erfindung betrifft ein motorisch betriebenes Handgerät, insbesondere eine Heckenschere, einen Rasenmäher o.dgl., mit einem Griff, der mindestens teilweise als Hohlprofil ausgebildet ist und ein in die Ausgangsstellung beaufschlagtes, in das Hohlprofil seitlich einschiebbares Betätigungselement aufweist, das über ein Verbindungselement mit einer Schalteinrichtung verbunden bzw. verbindbar ist, die bei Loslassen des Betätigungselementes den Antrieb des Gerätes stillsetzt.

Es ist bereits eine elektromotorisch angetriebene Heckenschere (DE-A 28 39 002) bekannt, bei der an dem Gehäuse der Heckenschere ein geschlossener Bügelgriff angeordnet ist. Innerhalb des Bügelgriffs ist ein der Form des Bügels in etwa entsprechender Schaltrahmen angeordnet, der verkippt und angehoben werden kann. In der Mitte der Heckenschere zugewandten Seite des Schaltrahmens ist eine Stange befestigt, die durch Anheben oder Verkippen des Schaltrahmens bewegt werden kann und die auf einen Mikroschalter einwirkt, der den Strom zu der Heckenschere unterbricht. Zusätzlich ist mit der Stange noch eine Bremse für den Antrieb betätigbar. Dieser Schaltrahmen ist zwar schon von drei Seiten des Griffes her bedienbar, jedoch ist eine Seitwärtsverschiebung des Schaltrahmens ohne gleichzeitige Verkippung nicht geeignet, die Schaltvorrichtung zu betätigen. Diese Seitwärtsverschiebung ist aus diesem Grunde auch durch die spezielle Ausgestaltung des Schaltrahmens verhindert. Greift nun ein Benutzer im Bereich der unteren Seitenkanten an, so muß er erhebliche Kraft aufwenden, um den Schaltrahmen zu verkippen. Daher ist die zufriedenstellende Betätigung des Schaltrahmens von allen Seiten her nicht gewährleistet.

Bei einer weiteren bekannten Heckenschere (DE-C 30 07 110) ist dieser Nachteil dadurch beseitigt, daß der starr angeordnete Bügel aus einem einseitig zur Seite hin offenen Profil besteht, in dem ein zweiter Bügel leicht über diese Seite vorstehend angeordnet ist, der um eine durch das Gehäuse verlaufende Achse verschwenkbar ist. Da der verschwenkbare Bügel zur Seite hin über den anderen Bügel vorsteht, läßt er sich von allen Seiten betätigen, wenn auch nicht überall mit gleicher Kraft. Hier besteht jedoch der Nachteil, daß bei ungeschickter Hantierung mit dieser Heckenschere durch Anschlagen an einem Gegenstand o.dgl. die Schaltrichtung unbeabsichtigt betätigt werden kann. Aufgrund der Verletzungsgefahr ist dies nachteilig.

Bei einer weiteren bekannten Heckenschere (DE-C 15 07 021) ist der gesamte Bügel, der aus Vollmaterial besteht, schwenkbar ausgebildet. Durch Verschwenken kann ein Schalter betätigt werden. Hier ist die Gefahr einer ungewollten Betätigung des Gerätes noch größer.

Bei dem eingangs genannten motorisch betriebenen Gerät kann es sich sowohl um Geräte mit Elektromotoren als auch um solche mit Verbrennungsmotoren oder pneumatischen Motoren handeln. Die Schalteinrichtung, die das Gerät bzw. dessen Antrieb stillsetzt, kann eine mechanische Kupplung, eine Bremse oder auch ein Schalter sein.

Der Erfindung liegt die Aufgabe zugrunde, ein motorisch betriebenes Handgerät derart weiter zu verbessern, daß die Schalteinrichtung mit größerer Sicherheit und größerer Bedienerfreundlichkeit benutzt werden kann. Darüber hinaus soll der Bügelgriff bei einfachem Aufbau universeller einsetzbar sein.

Zur Lösung dieser Aufgabe ist erfindungsgemäß vorgesehen, daß das Verbindungselement ein mindestens teilweise durch das Hohlprofil des Bügelgriffs längs eines vorzugsweise mindestens eine Biegung aufweisenden Wegs geführtes in Richtung seiner Längsachse im wesentlichen auf Zug beanspruchtes, flexibles Zugelement ist, wobei der Verschiebungsweg des Betätigungselementes im wesentlichen senkrecht zur Längsachse des Zugelements im Bereich des Betätigungselementes gerichtet ist, wodurch eine Auslenkung des Zugelementes im wesentlichen quer zu seiner Längsachse im Bereich des Betätigungselementes und dadurch ein Zug in Richtung seiner Längsachse bewirkt wird. Das Verbindungselement läßt sich aufgrund seiner Biegsamkeit durch das Innere des Bügelprofils in beliebigen Formen hindurchführen. Dies führt dazu, daß unabhängig von der Richtung, in der das Betätigungselement verschoben wird, das Zugelement seitlich ausgelenkt wird und dadurch insgesamt in Längsrichtung des Zugelementes eine Kraft ausgeübt wird. Damit wird gleichzeitig eine Hebelübersetzung bzw. -untersetzung erreicht, so daß mit einfachen Mitteln die zur Betätigung der Schalteinrichtung erforderliche Kraft bzw. der nötige Weg aufgebracht werden kann.

Das Zugelement kann beispielsweise durch das gesamte Bügelprofil hindurchgeführt sein und mit beiden Enden an einer Schalteinrichtung befestigt sein. Besonders günstig ist es jedoch, wenn das Zugelement im Bereich seines einen Endes vorzugsweise im Innern des Griffs festgelegt ist und mit seinem anderen Ende auf die Schalteinrichtung einwirkt. Die Festlegung an einer Stelle kann beispielsweise an dem dem freien Ende gegenüberliegenden anderen Ende vorgesehen sein. Es ist natürlich auch möglich, das Zugelement an einer Stelle, etwa in seiner Mitte, festzulegen und dann zwei freie Enden zu haben.

Es kann erfindungsgemäß in Weiterbildung vorgesehen sein, daß das Zugelement im Bereich seiner beiden Enden vorzugsweise im Inneren des Griffs festgelegt ist und in einem mittleren Bereich auf die Schalteinrichtung einwirkt. Die durch die Verschiebung der Betätigungselemente bewirkte Wegänderung des Zugelementes führt dazu, daß dies dann im mittleren Bereich einen anderen Weg einnimmt, beispielsweise einen verkürzten Weg. Diese Verkürzung des Wegs kann zum Auslösen der Schalteinrichtung ausgenutzt werden.

Beispielsweise wirkt das Zugelement auf einen mit der Schalteinrichtung zusammenwirkenden Drehschieber ein. So kann das Zugelement beispielsweise im mittleren Bereich um zwei Rollen herumgelegt werden, die zu beiden Seiten des Drehpunkts des Drehschiebers liegen. Ein Betätigen des Betätigungselementes führt dann dazu, daß der Drehschieber herumgeschwenkt wird, so daß er beispielsweise auf einen elektrischen Schalter einwirken kann. Ein derartiger Drehschieber kann auch im Bereich des freien Endes des Zugelementes angeordnet sein.

In Weiterbildung der Erfindung kann das Zugelement in einem mittleren Bereich schlaufenartig um ein Betätigungselement für die Schalteinrichtung herumgeführt sein. Die Verkürzung der Schlaufe führt dann zu einer Verschiebung des Betätigungselementes für die Schalteinrichtung.

Als Zugelement kann jedes biegsame oder flexible Element verwendet werden, beispielsweise ein Band, eine Kette o.dgl. Besonders günstig und von der Erfindung bevorzugt wird ein Metallseil.

In Weiterbildung kann vorgesehen sein, daß das freie Ende des Zugelements oder ein mit dem Zugelement verbundener Drehschieber ein Druckstück aufweist, das auf ein Auslöseelement der Schalteinrichtung einwirkt. Das Auslöseelement der Schalteinrichtung kann beispielsweise der Druckknopf eines elektrischen Schalters sein, es kann natürlich auch ein Sensorfeld o.ä. sein.

In Weiterbildung der Erfindung kann vorgesehen sein, daß das Zugelement durch eine im Inneren des Griffs angeordnete Feder straff gehalten ist. Die im Stand der Technik vorhandenen Federeinrichtungen zum Vorspannen des Bedienungselementes sind in der Regel im Gehäuse des Gerätes angeordnet, nicht im Griff. Die Anordnung der Feder zusammen mit dem Seil im Griff, hat jedoch große Vorteile. Zum einen kann die Federvorspannung des Zugelementes dazu verwendet werden, das Betätigungselement in seine Ausgangsstellung zu beaufschlagen. Zum anderen kann der Griff als ein in sich abgeschlossenes Bauteil angesehen werden, was seine Montage und Lagerhaltung wesentlich vereinfacht. In Weiterbildung ist daher vorgesehen, daß der Griff als ein mit dem Gehäuse des Handgerätes verbindbares Bauteil ausgebildet sein kann, wobei ein durch das Zugelement bewegbares Element mit der im Gehäuse des Handgerätes angeordneten Schalteinrichtung verbindbar ist. Da bei Heckenscheren beispielsweise der Bügelgriff von dem Messerbalken schräg wegragt, nimmt er bei der Lagerhaltung und in der Verpackung bisher viel Platz weg. Mit den Maßnahmen nach der Erfindung wird es daher möglich, den Bügel lose in die Verpackung einzulegen und die Befestigung des Bügels an dem Gerät von dem Endverbraucher durchführen zu lassen. Dies ist aufgrund der von der Erfindung vorgeschlagenen Maßnahmen ohne Schwierigkeiten möglich.

In Weiterbildung der Erfindung kann vorgesehen sein, daß mindestens zwei, vorzugsweise drei voneinander unabhängige Betätigungselemente auf das Zugelement einwirken. In diesem Fall läßt sich das Betätigungselement besonders einfach und leicht bedienen, da jeweils nur ein relativ einfaches Betätigungselement bewegt zu werden braucht, ohne daß ein gesamter Schaltrahmen o.dgl. mitbewegt werden müßte. Die Vorteile der Erfindung bleiben nicht nur erhalten, sondern werden sogar noch gesteigert.

Es ist auch möglich, die Verschiebung der Betätigungselemente und/oder den dadurch erreichten Bewegungsweg so zu wählen, daß nur bei Drücken zweier Elemente die Schalteinrichtung ausgelöst wird.

Erfindungsgemäß kann mit Vorteil vorgesehen sein, daß die Betätigungselemente in das Griffprofil einschiebbare Tasten sind, deren Verschiebungsrichtung etwa senkrecht zum Verlauf des Zugelementes in ihrem Bereich verläuft. Beispielsweise können bei einem etwa U-förmigen Bügelgriff an jeder Seite innen eine Taste angeordnet sein, während das Zugelement in dem Bügel um alle drei Tasten herumgeführt wird. Die Betätigung einer Taste führt zu einer Verschiebung des freien Endes des Zugelementes, gleichgültig, an welcher Stelle die Taste angeordnet ist. Sogar ein Schrägverschieben der Taste führt zur Auslösung.

In Weiterbildung kann vorgesehen sein, daß die Schalteinrichtung ein in Öffnungsstellung vorgespannter elektrischer Schalter ist. Dann kann beispielsweise das Druckstück am freien Ende des Zugelementes diesen Schalter im Normalfall in seine Schließstellung beaufschlagen.

In Weiterbildung kann vorgesehen sein, daß der Betätigungskopf des Schalters unmittelbar hinter einer Öffnung des Gehäuses angeordnet ist, durch die das Druckstück des Zugelementes hindurchgreift. Dann kann der Bügelgriff auch von einem Laien montiert werden, ohne daß dieser eine Verbindung zwischen dem Verbindungselement und der Schalteinrichtung vornehmen muß. Das Druckstück des Zugelementes ist automatisch an der richtigen Stelle angeordnet.

Besonders günstig ist es, wenn in Weiterbildung der Erfindung das Zugelement ein Seil ist, dessen eines Ende im Bügelprofil festgelegt ist, das tangential die jeweils inneren Seiten der Betätigungselemente berührt und dessen freies Ende mit einem Druckstück verbunden ist, das mit Hilfe einer Feder das Seil gespannt hält.

Es kann vorgesehen sein, daß das Zugelement polygonartig geführt ist und an den Ecken des Polygons vorzugsweise über mindestens teilweise ausgebildete Rollen verläuft.

In Weiterbildung kann für den Fall, daß das motorbetriebene Gerät eine Heckenschere mit einem Griff in Form eines ggf. durch ein Gehäuse der Heckenschere geschlossenen Bügels und mit einem weiteren Griff ist, vorgesehen sein, daß der zweite Griff die Form eines ggf. durch das Gehäuse der Heckenschere geschlossenen Bügels aufweist, der in einer Ebene senkrecht zur Messerebene und parallel zur Längsrichtung des Messerbalkens liegt. Aufgrund der Tatsache, daß der Bügelgriff von allen Seiten her bedienbar ist und der speziellen Anordnung des weiteren Griffes, läßt sich eine Heckenschere besonders günstig handhaben. Dies gilt insbesondere dann, wenn der weitere Griff ein an seiner Innenseite angeordnetes, mit einem Schalter verbundenes Betätigungselement aufweist. Heckenscheren sind üblicherweise nur durch Betätigung zweier Betätigungselemente auslösbar. Bei der von der Erfindung vorgeschlagenen Anordnung der beiden bügelartig geschlossenen Griffe läßt sich die Heckenschere besonders einfach und ergonomisch handhaben. Mit dem Bügelgriff läßt sich das Gewicht der Schere tragen, während der weitere Griff die Bewegungsrichtung der Heckenschere dirigiert. Dabei kann erfindungsgemäß vorgesehen sein, daß das Betätigungselement eine in das Innere des Bügels einschiebbare langgestreckte Taste aufweist. Diese Taste kann im übrigen genauso ausgebildet sein, wie die bei dem Bügelgriff verwendete Taste.

Die Erfindung schlägt ebenfalls einen Bügelgriff für motorgetriebene Geräte, insbesondere elektrische Gartengeräte vor, der an seiner Innenseite mindestens ein, vorzugsweise mehrere Betätigungselemente aufweist, die über ein im Inneren des Bügelprofils verlaufendes Zugelement mit einer Schalteinrichtung zum Inbetriebsetzen des Gerätes verbindbar sind. Dabei kann erfindungsgemäß der Bügel die in dieser Anmeldung beschriebenen Merkmale aufweisen.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:

Fig. I eine perspektivische vereinfachte Darstellung einer Heckenschere mit einem erfindungsgemäßen Griff;

Fig. 2 eine abgebrochene Seitenansicht einer Heckenschere;

Fig. 3 eine Ansicht des geöffneten Bügelgriffes;

Fig. 4 in vergrößertem Maßstab eine Darstellung der Befestigungsmöglichkeit des Bügelgriffes;

Fig. 5 einen Schnitt durch den zweiten bügelartig ausgebildeten Griff;

Fig. 6 einen vereinfachten Schnitt durch das Bügelprofil etwa nach Linie VI-VI in Fig. 3;

Fig. 7 eine Teilansicht eines Griffs einer weiteren Ausführungsform;

Fig. 8 einen Schnitt längs Linie VIII-VIII in Fig. 7;

Fig. 9 schematisch eine weitere Ausführungsform eines Griffs;

Fig. I0 schematisch eine weitere Anordnung;

Fig. II eine weitere Anordnung des freien Endes eines Zugelementes.

Die in Fig. I dargestellte Heckenschere enthält ein zentrales Gehäuse II, in dem ein Elektromotor sowie der Antrieb für die Messer angeordnet ist. Auf der vorderen rechten Seite ist an dem Gehäuse II ein Handgriff I2 angeordnet, der die Form eines geschlossenen rechtwinkligen Bügels aufweist. Er bildet dadurch eine rechteckige Öffnung I3, durch die ein Benutzer eine Hand hindurchstrecken kann. In die Öffnung I3 ragt eine Taste I4, die im Inneren des Griffes I2 mit einem Schalter verbunden ist. Im Bereich der Oberseite führt ein elektrisches Kabel I5 in den Handgriff I2.

Auf der dem Handgriff I2 und dem elektrischen Kabel I5 abgewandten Seite des Gehäuses II ist eine Messerschiene I6 angeordnet, die zwei nur schematisch dargestellte übliche gegeneinander verschiebbare Messer I7 aufweist. Die Messer I7 werden durch ein im Gehäuse II angeordnetes Getriebe in hin- und hergehende Bewegung versetzt. Auf der der Messerschiene zugewandten Seite des Gehäuses II ist ein Bügelgriff I8 angeschraubt, der etwa Rahmenform aufweist, wobei der untere Rahmenabschnitt I9 nicht geschlossen ist, sondern einen der Breite des Gehäuses II in diesem Bereich entsprechenden Abstand aufweist. An den Enden des Bügelgriffes sind senkrecht zum unteren Rahmenabschnitt I9 verlaufend zwei Befestigungsflansche 20 angebracht, die gegenüber dem Profil des Bügels I8 eine vergrößerte Anlagefläche aufweisen. Jeder dieser Flansche 20, von denen in Fig. I nur einer zu sehen ist, enthält zwei Löcher 2I, durch die eine Schraube hindurchgesteckt werden kann, mit deren Hilfe der Bügelgriff I8 an dem Gehäuse II festgeschraubt wird. An dem oberen Rahmenabschnitt 22 und den beiden seitlichen Rahmenabschnitten 23 enthält der Bügelgriff I8 auf seiner Innenseite jeweils eine Taste 24. In den Ecken des Bügelgriffes I8, jeweils zwischen zwei Tasten 24, ist ein nicht bewegbarer Winkelbereich 25 vorgesehen.

Der Handgriff I2 liegt im wesentlichen in einer Ebene, die senkrecht auf der Ebene der Messer I7 liegt, wobei die Längsachse der Messerschiene I6 durch die Ebene des Handgriffes I2 verläuft.

Auch der Bügelgriff I8 liegt in einer Ebene, die senkrecht auf der Ebene des Handgriffes I2 steht. Der Bügelgriff I8 kann von dem Benutzer von allen drei Seiten, d.h. von den seitlichen Rahmenabschnitten 23 und dem oberen Rahmenabschnitt 22 her ergriffen werden. Der Benutzer greift mit einer Hand um den entsprechenden Rahmenabschnitt herum und kann dadurch zwanglos eine der Tasten 24 eindrücken. Bei gleichzeitigem Eindrücken der Tasten 24 und der Tasten I4 im Handgriff I2 wird das Gerät mit Strom versorgt. Die Heckenschere kann mit gleicher Bequemlichkeit von einem Rechtshänder und einem Linkshänder bedient werden. Ein unbeabsichtigtes Betätigen sowohl der Taste I4 als auch der Tasten 24 ist aufgrund der Anordnung auf der Innenseite der Bügel nicht möglich.

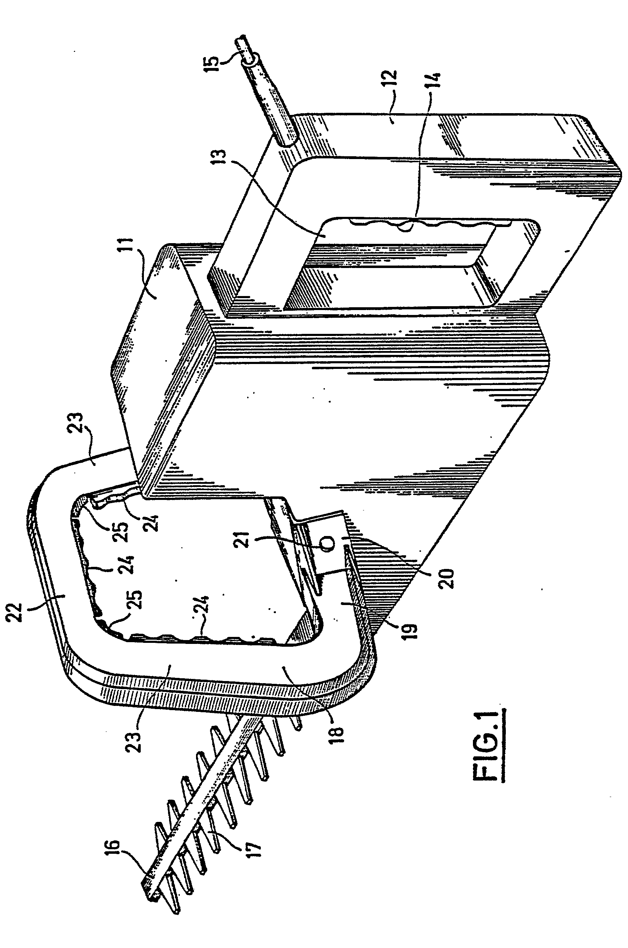

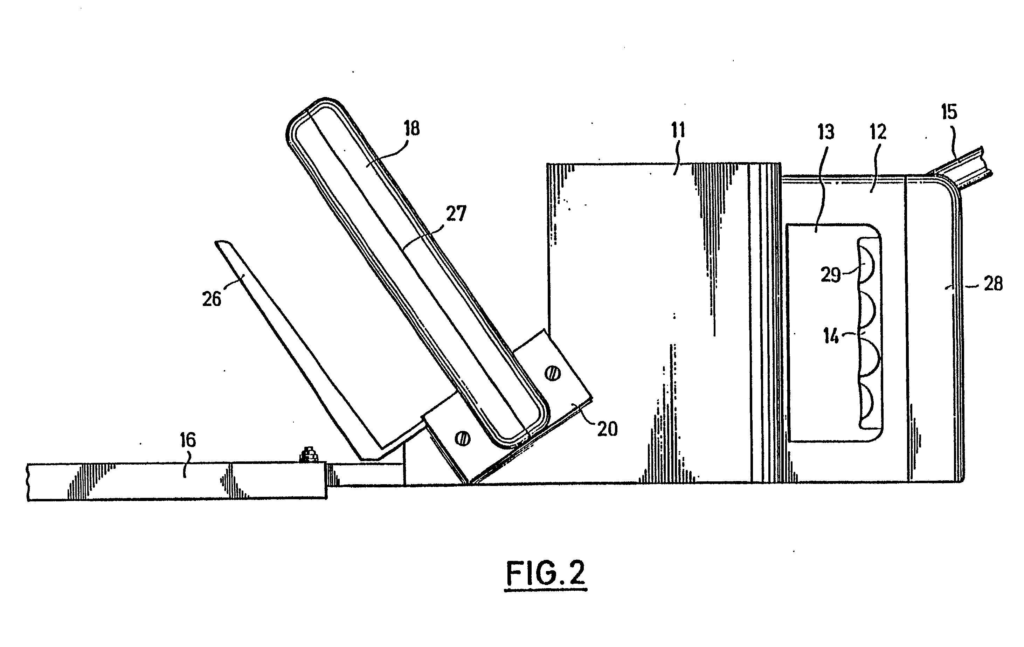

Fig. 2 zeigt die Anordnung in Fig. I von der Seite. Der Bügelgriff I8 verläuft schräg gegenüber der Messerschiene I6, wobei zwischen dem Bügelgriff I8 und der Messerschiene I6 noch ein Schutzblech 26 mit Abstand von dem Bügelgriff I8 angeordnet ist. Der Bügelgriff I8 ist zweiteilig ausgebildet, wobei die Trennungslinie 27 zwischen den beiden Teilen des Bügelgriffes in dessen Längsrichtung verläuft. Die Trennungslinie trennt daher auch die Flansche 2O auf beiden Seiten des Gehäuses II der Heckenschere.

Der Handgriff I2 auf der dem Bügelgriff I8 abgewandten Seite des Gehäuses II enthält eine abnehmbare Endkappe 28, die an dem Griff I2 angeschraubt ist. Dadurch läßt sich der im Innern des Handgriffes I2 angeordnete Schalter leichter erreichen sowie die Grifftaste I4 einsetzen. Die Grifftaste I4 besitzt insgesamt vier Fingermulden 29, die ein ermüdungsfreies Angreifen des Benutzers an der Taste I4 sicherstellen sollen.

Bei der Benutzung der Heckenschere ergreift der Benutzer diese beispielsweise mit der linken Hand am Bügelgriff I8 und mit der rechten Hand am Handgriff I2. Durch Drücken der Taste I4 des Handgriffes I2 und einer der Tasten 24 des Bügelgriffes I8 wird der Stromkreis für den im Gehäuse II angeordneten Elektromotor geschlossen.

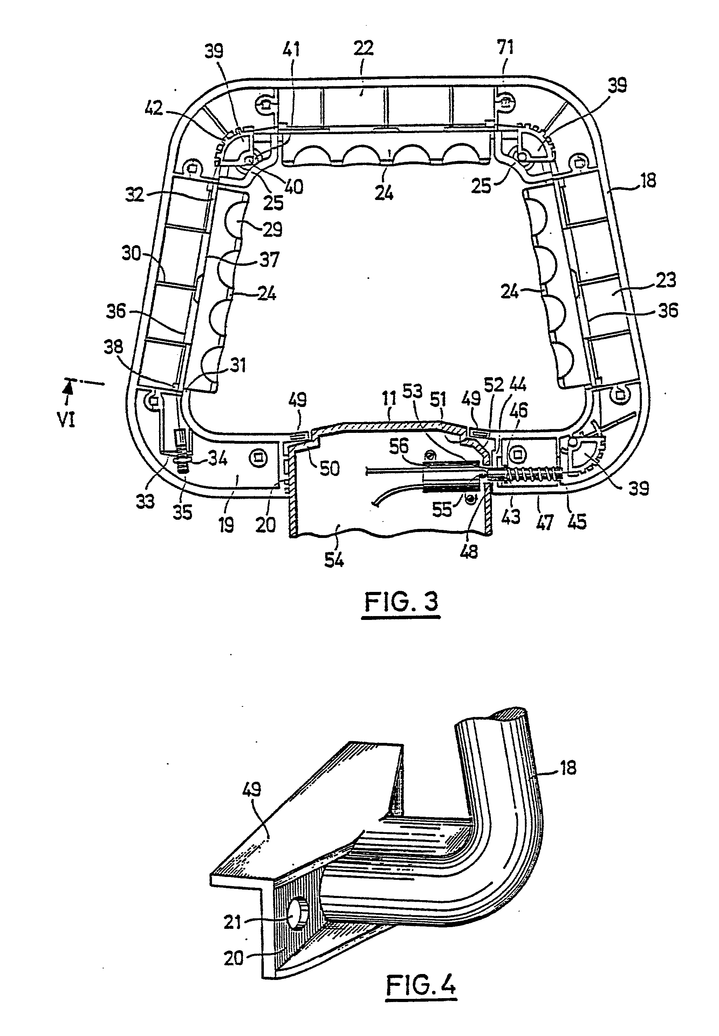

Fig. 3 zeigt eine Ansicht des geöffneten Bügelgriffes 18. Der Bügelgriff 18 weist etwa die Form eines Trapezes auf. Der obere kürzere Rahmenabschnitt 22 verläuft parallel zu dem unteren unterbrochenen Rahmenabschnitt 19, während die beiden seitlichen Rahmenabschnitte 23 in Richtung auf den oberen Rahmenabschnitt 22 leicht konvergieren.

Der Bügelgriff 18 ist als Hohlprofil ausgebildet, wobei seine beiden Hälften quer zur jeweiligen Längsrichtung verlaufende Verstärkungsrippen 30 aufweisen. An den nach innen gerichteten Seiten des Bügelgriffes 18 sind drei Öffnungen 31 vorhanden, in denen jeweils eine Taste 24 angeordnet ist. Die Tasten sind langgestreckt und weisen Fingermulden 29 auf. Im Bereich ihrer in das Innere des Profils des Bügels 18 weisenden Seiten haben die Tasten äußere Ansätze 32, so daß die Tasten in ihrem äußeren Endbereich etwas größer sind als die Öffnungen 31. Ein Herausfallen der Tasten aus den Öffnungen des geschlossenen Bügels ist daher nicht möglich.

Im Bereich der linken unteren Ecke des Bügelgriffes 18 ist in einer Querwand 33 eine Öffnung vorhanden, durch die ein mit einer Mutter 34 versehener kurzer Gewindestift 35 gesteckt ist. Der Gewindestift 35 ist an dem einen Ende eines Drahtseiles 36 befestigt. Anstelle des Drahtseiles 36 könnte auch ein Kunststoffaden, ein Band, eine Kette o.dgl. vorhanden sein. Das Drahtseil 36 verläuft unmittelbar längs der in das Innere des Profils gerichteten Rückseite 37 der einen Taste 24. An der Rückseite 37 ist im Bereich der Ansätze 32 eine Gabel 38 einstückig angeformt, durch die das Drahtseil 36 hindurchgeführt ist. Es ist dadurch gegen ein seitliches Verrücken geschützt. Unmittelbar im Anschluß an die Taste 24 ist das Drahtseil 36 über ein Kreisbogensegment 39 geführt, das in dem Winkelbereich 25 um eine Achse 40 drehbar gelagert ist. Das Kreisbogensegment 39 ist aus Kunststoff hergestellt und greift mit einem seitlichen Ansatz in eine Vertiefung 41, die sich um die Achse 40 herum erstreckt. Das Kreisbogensegment 39 weist auf seiner kreisbogenförmig ausgebildeten Außenseite mehrere Halterungsansätze 42 auf, die abwechselnd zu beiden Seiten des Drahtseiles 36 angeordnet sind. Das Drahtseil wird zwischen diesen Halterungsansätzen 43 durchgeführt und leicht eingeklemmt, so daß eine Bewegung des Drahtseiles 36 in seiner eigenen Längsrichtung die Kreisbogensegmente 39 mitnimmt. Es tritt damit nur eine Reibung an der Lagerung des Kreisbogensegmentes 39 auf und keine Gleitreibung zwischen dem Drahtseil 36 und dem Kreisbogensegment 39.

Im Anschluß an das erste Kreisbogensegment 39 verläuft das Drahtseil in Längsrichtung des oberen Rahmenabschnittes 22 des Bügelsgriffes 18 in gleicher Weise hinter der dort angeordneten Drucktaste 24. Diese ist identisch aufgebaut wie die beiden anderen Drucktasten 24. In dem in Fig. 3 rechten oberen Winkelbereich 25 ist ein weiteres Kreisbogensegment 39 angeordnet, das ebenfalls identisch ist wie die beiden anderen Kreisbogensegmente.

Im Anschluß an die dritte Drucktaste ist das Drahtseil 36 über ein drittes Kreisbogensegment 39 geführt und unmittelbar daran anschließend mit einem metallischen Stift 43 verbunden. Dieser Stift ist in einer Querwand 44 und einer beabstandeten zweiten Querwand 45 geführt. Der Stift 43 enthält einen Bund 46, an dem eine Schraubenfeder 47 anliegt. Das andere Ende der Schraubenfeder stützt sich auf der Querwand 45 zwischen dem Stift 43 und dem Segment 39 ab. Dadurch beaufschlagt die Feder 47 den Stift 43 derart, daß sein linkes freies Ende 48 über die Querwand 44 nach außen ragt. Gleichzeitig wird durch die Feder 47 das Seil 36 straff gehalten. Dies wiederum führt dazu, daß die Tasten 24 in die in Fig. 3 dargestellte Position beaufschlagt werden, in der sie möglichst weit aus dem Bügelprofil herausstehen.

Die Querwand 44, aus der das freie Ende 48 des Stiftes 43 herausragt, bildet den Abschluß des Bügelprofils und geht einstückig in die Flansche 20 über.

Etwa rechtwinklig zu den Flanschen 20 erstreckt sich ein weiterer Flansch 49. Der Bügelgriff 18 wird von oben auf das Gehäuse 11 aufgeschoben. Das Gehäuse 11 weist in seinen Oberkanten je eine Stufe 50, 51 auf, die derart angeordnet und ausgebildet sind, daß der obere Flansch 49 bündig in die Stufe 50 hineinragt. Die dem Druckstift 43 zugewandte Stufe 51 enthält eine Schräge 52, so daß bei Aufschieben des Bügelgriffes von oben in Fig. 3 das freie Ende 48 des Druckstiftes 43 von der Schräge 52 gegen die Wirkung der Feder 47 zurückgeschoben wird. Bei Erreichen eines Loches 53 in der Wand 54 des Gehäuses 11 gleitet der Stift unter der Wirkung der Feder 47 wieder vor, so daß sein vorderes Ende 48 den Betätigungsknopf 55 eines im Innern des Gehäuses 11 angeordneten elektrischen Schalters 56 beaufschlagt. Der Schalter 56 ist derart ausgebildet, daß bei Drücken des Betätigungsknopfes 55 der Schalter geöffnet ist.

Wird nun eine der drei Tasten 24 in das Innere des Profils des Bügelsgriffes 18 eingeschoben, so wird das Seil in diesem Bereich nach innen bewegt, was zu einer in Längsrichtung des Drahtseiles 36 führenden Kraft und damit zu einem Verschieben des Druckstiftes 43 in das Innere des Bügelgriffes 18 führt. Damit wird der Schalter dann geschlossen. Es ist bei der Verschiebung der Tasten 24 im übrigen vollkommen gleichgültig, ob diese mit vier Fingern einer Hand vollständig eingeschoben werden, oder ob diese nur im Bereich ihres einen Endes schräg in das Innere des Griffes hineingeführt werden. In beiden Fällen erfolgt eine ausreichende Verschiebung des Druckstiftes 43. Bei Verschieben des Druckstiftes nach rechts verringert sich der Abstand zwischen den Windungen der Schraubenfeder 47, bis diese aneinander anliegen. Dadurch wird verhindert, daß das vordere Ende des Druckstiftes aus der Öffnung herausgelangt.

Fig. 4 zeigt in vergrößertem Maßstab perspektivisch die beiden Flansche 20 und 49 am Ende des Bügelgriffes 18. Das Gehäuse 11 der Heckenschere kann Ausnehmungen, Rippen o.ä. Einrichtungen aufweisen, die mit den Flanschen 20, 49 zusammenwirken, um eine Zentrierung oder Positionierung der Enden des Bügelgriffes 18 in der richti gen Stellung zu gewährleisten, damit das vordere Ende 48 des Druckstiftes 43 dem Betätigungsknopf 55 des Schalters 56 gegenüberliegt.

Während bei der in Fig. 3 dargestellten Ausführungsform der Druckstift 43 einen elektrischen Schalter 56 betätigt, könnte selbstverständlich das Ende des Drahtseiles auch mit einer mechanischen Kupplung oder einer sonstigen Einrichtung verbindbar sein, die zu einer Stillsetzung bzw. Inbetriebnahme der Heckenschere führt.

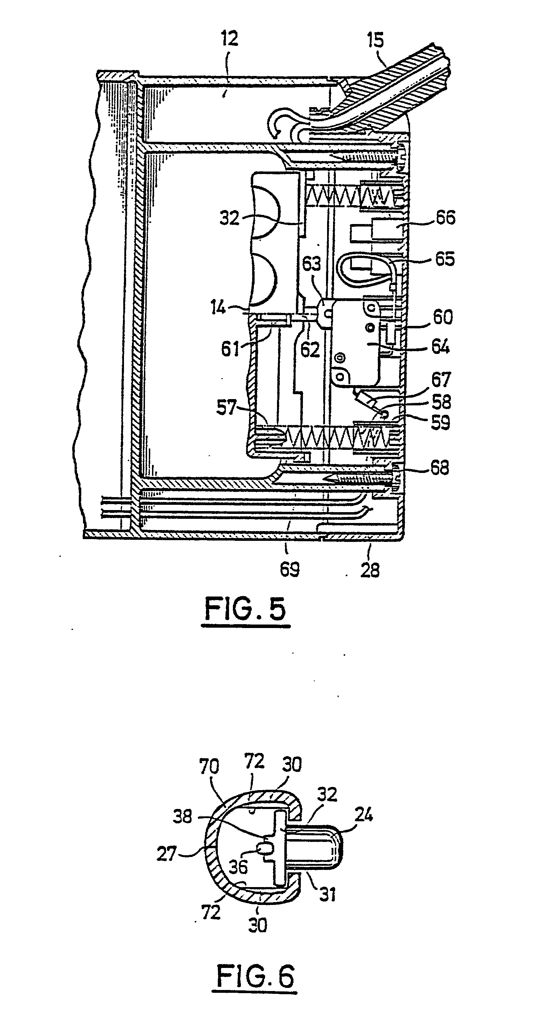

Fig. 5 zeigt im Schnitt den Handgriff 12 mit der Taste 14. Die Taste 14 ist identisch aufgebaut wie die Tasten 24 in Fig. 3. Sie hat in ihrem Inneren zwei Ansätze 57, von denen nur einer in der unteren Hälfte der Fig. 5 zu sehen ist. Um die Ansätze 57 herum ist je eine Schraubenfeder 58 angeordnet, die sich in einer entsprechenden Hülse 59 auf dem Boden 60 der Endkappe 28 abstützt. Auf diese Weise wird die Taste 14 in die dargestellte Stellung beaufschlagt. Etwa in der Mitte ihrer Längserstreckung weist die Taste 24 einen hülsenartigen Ansatz 61 auf, in den ein Betätigungsstift 62 eingesetzt ist. Der Stift 62 greift an dem Betätigungsknopf 63 eines elektrischen Schalters 64 an. Von dem Schalter 64 führt eine Leitung 65 zu einer Lüsterklemme 66 und von dort aus zu der elektrischen Anschlußleitung 15. Die zweite mit dem Schalter 64 verbundene Leitung 67 führt in das Innere des Gehäuses zu dem dort angeordneten Elektromotor.

Die Endkappe 28 ist mit Hilfe zweier Schrauben 68 an dem Griff 12 festgeschraubt, die in entsprechende Hülsen 69 des Griffes eingeschraubt sind. Auch dieser Handgriff 12 vermeidet eine unbeabsichtigte Betätigung der Taste 14.

Fig. 6 zeigt einen Querschnitt durch das Bügelprofil 70. Es besteht, wie bereits erwähnt, aus zwei längs einer Trennungslinie 27 miteinander verbundener Halbschalen. Die Verbindung geschieht durch mehrere Schrauben, wobei in Fig. 3 die Hülsen 71 zu sehen sind, in die die Schrauben eingreifen. Aus Fig. 6 sind die Verstärkungsrippen 30 zu sehen, die eine geradlinige Innenkante 72 aufweisen. Mit Hilfe dieser geradlinigen, parallel zueinander verlaufenden Innenkanten 72 werden die Tasten 24 geführt, da der Abstand der beiden Innenkanten 72 etwa der Breite der Ansätze 32 entsprechen. Fig. 6 stellt im übrigen auch dar, wie die Ansätze 32 eine Basis für die Taste 24 bilden, die größer ist als die Öffnung 31. Die auf der Rückseite 37 der Tasten 24 gebildete Gabel 38 führt das Drahtseil 36 und sichert dies gegen ein seitliches Verrutschen.

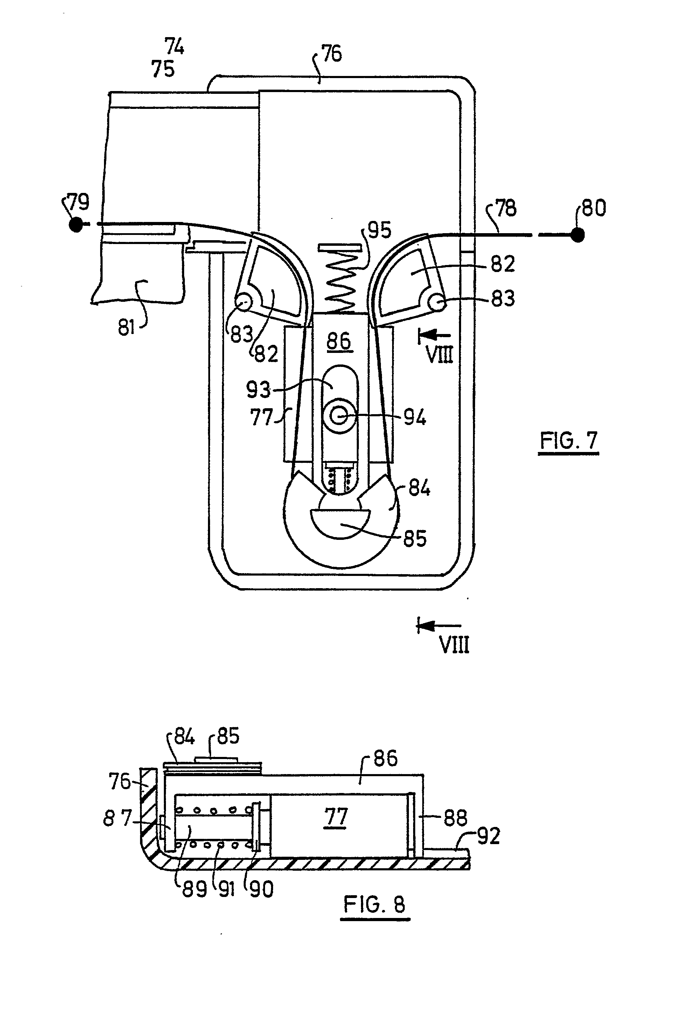

Fig. 7 zeigt einen Teilschnitt aus einer weiteren Ausführungsform, bei der am Griff 75, von dem hier nur eine Hälfte dargestellt ist, ein Schaltkasten 76 angeordnet ist, in dem ein elektrischer Schalter 77 untergebracht ist. Im Gegensatz zu der Ausführungsform nach Fig. 3 ist der Schalter also nicht im Gehäuse des Handgeräts, sondern im Griff untergebracht. Das als Drahtseil 78 ausgebildete Zugelement ist im Bereich seiner beiden Enden 79, 80 im Griff 75 festgelegt. Es führt tangential an der im Innern des Griffs 75 angeordneten Seite der Betätigungstaste 81 vorbei und ist im Innern des Schaltkastens 76 schlaufenartig geführt. Das Seil 78 führt zunächst, geht man links aus, über eine schwenkbar an einem Zapfen 83 gelagerte Viertelrolle 82, die identisch mit der Rolle 39 der Ausführungsform nach Fig. 3 ist. Von dort aus führt das Seil 78 etwa rechtwinklig gegenüber dem Griff 75 nach außen und ist dort um eine einen Dreiviertelkreis beschreibende Teilrolle 84 herumgeführt. Danach ist das Seil 78 über eine zweite Viertel rolle 82 geführt, die benachbart zu der ersten Viertelrolle 82 angeordnet ist. Diese Viertelrolle 82 ist ebenfalls an einen Zapfen 83 schwenkbar gelagert. Von der zweiten Viertelrolle 82 führt das Seil 78 wieder in die zweite, nicht dargestellte Hälfte des Griffes 75, wo es wiederum in Verlängerung zu der ursprünglichen Richtung im Griff 75 verläuft.

Die Teilrolle 84 ist drehbar an einem Ansatz 85 gelagert, der etwa Halbkreisform aufweist. Der Ansatz 85 ist auf der Oberseite eines Schiebers 86 im Bereich von dessen einem Ende vorzugsweise einstückig angeformt. Der Schieber 86 übergreift den elektrischen Schalter 77 und weist im Bereich seiner beiden Enden je einen nach unten gerichteten Flansch 87, 88 auf.

Der dem Ende, das den Ansatz 85 aufweist, zugewandte Flansch 87 weist eine in der Zeichnung nicht sichtbare Öffnung auf, durch die sich der stiftartige Schalterknopf 89 des Schalters 77 erstreckt. Der Schalterknopf 89 weist im Bereich seines dem Schaltergehäuse 77 zugewandten Endes einen umlaufenden Flansch 90 auf. Zwischen der Innenseite des Flansches 87 des Schiebers 86 und dem Flansch 90 des Schalters 77 erstreckt sich eine Schraubenfeder 91.

Der gegenüberliegende Flansch 88 des Schiebers 86 weist einen Schlitz auf, durch den sich eine Rippe 92 am Boden des Schaltkastens 76 erstreckt. Dadurch ist der Schieber 86 in seiner Längsrichtung verschiebbar ausgebildet.

Im Bereich seiner Oberseite enthält der Schieber 86 eine langgestreckte Ausnehmung 93, durch die sich ein Verriegelungselement 94 des Schalters 77 erstreckt.

Zur mechanischen Vorspannung des Schiebers 86 in die dargestellte Stellung kann zwischen dem Schieber 86 und einem Gehäuseteil eine Druckfeder 95 vorhanden sein.

Die Wirkungsweise der dargestellten Vorrichtung ist folgende. Ein Verschieben der Taste 81 führt zu einer Verkürzung der durch das Seil 78 gebildeten Schlaufe, so daß die linke Viertelrolle 82 etwas im Gegenuhrzeigersinn verschwenkt wird. Das Verkürzen der Schlaufe führt zu einer Verschiebung des Schiebers 86 von unten nach oben in Fig. 7, wobei diese Verschiebung dadurch erleichtert wird, daß die Teilrolle 84 drehbar gelagert ist. Dadurch wird der Schieber 86 in Fig. 8 von links nach rechts verschoben, wobei die Druckfeder 91 auf den Flansch 90 des Schalterknopfs 89 drückt und den Schalter betätigt, nachdem vorher das mechanische Verriegelungselement 94 heruntergedrückt wurde.

Wird eine zweite, beispielsweise auf der gegenüberliegenden Seite des Schalterkastens 76 angeordnete Taste 81 zusätzlich noch betätigt, so führt dies zu einer weiteren Verschiebung des Schiebers 86. Da der Schalterknopf 89 jedoch nicht weiter hereingedrückt werden kann, wird die zusätzliche Bewegung durch die Feder 91 aufgenommen. Es kommt also nicht zu einer Beschädigung des Schalters 77.

Es ist selbstverständlich möglich, durch Verwendung einer anders ausgestalteten Feder 91 oder einer anderen Ausbildung der Anschläge dafür zu sorgen, daß erst bei einer durch Betätigung von zwei Tasten 81 bewirkten Verschiebung des Schiebers 86 eine Betätigung des elektrischen Schalters 77 auftritt. Dies würde dann eine echte Zweihand-Bedienung bedeuten.

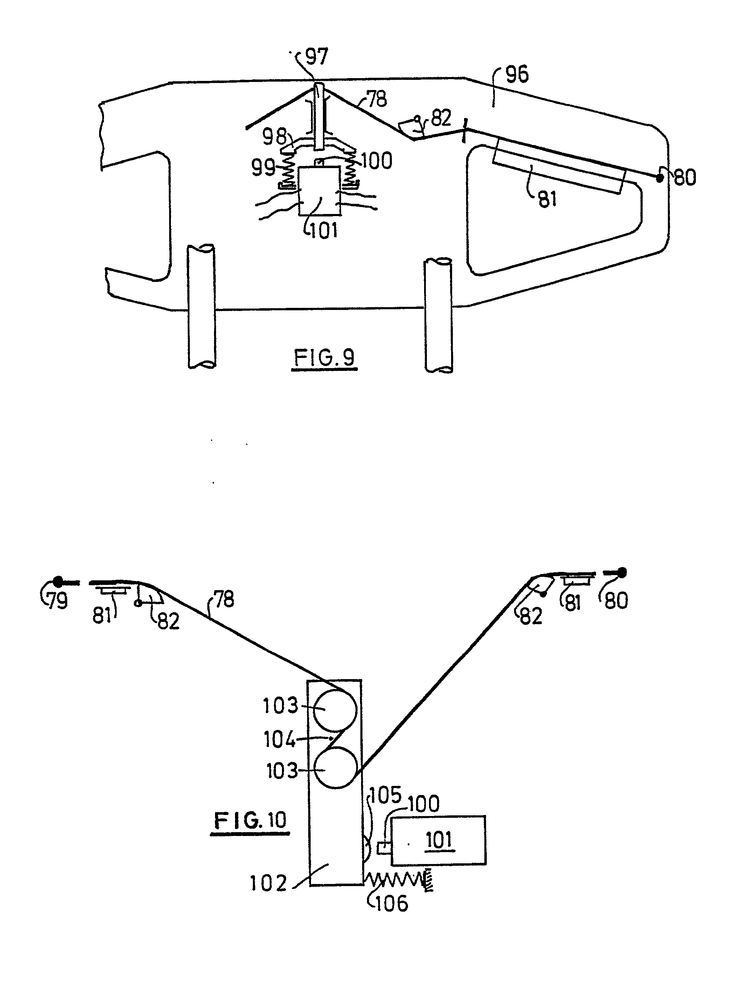

Fig. 9 zeigt stark schematisch vereinfacht das Innere eines weiteren Griffs 96. Wiederum ist das Drahtseil 78 im Bereich seiner beiden Enden festgelegt, und zwischen seinen beiden Enden polygonartig geführt. Im mittleren Bereich ist das Drahtseil 78 winklig über einen Schieber 97 geführt, der bzgl. des Drahtseils 78 etwa die Winkelhalbierende bildet. Die Betätigung der Taste 81 führt zu einer Verschiebung des Schiebers 97. Die Betätigung der zweiten, in der Figur nicht dargestellten, gegenüberliegenden Taste führt zu einer weiteren Verschiebung des Schiebers. Der Schieber 97 weist an seinem Ende eine Brücke 98 auf, deren Enden durch Schraubenfedern 99 gegenüber dem Gehäuse 96 abgestützt sind. Durch die Federn 99 wird der Schieber 97 in die dargestellte Stellung beaufschlagt. In axialer Verlängerung des Schiebers 97 ist der Schaltknopf 100 eines elektrischen Schalters 101 angeordnet. Die Geometrie ist so gewählt, daß die Verschiebung des Schiebers 97 nur bei Betätigung beider Tasten 81 ausreicht, den Schaltknopf 100 des Schalters 101 so weit herabzudrücken, daß der Stromkreis durch den Schalter 101 geschlossen wird.

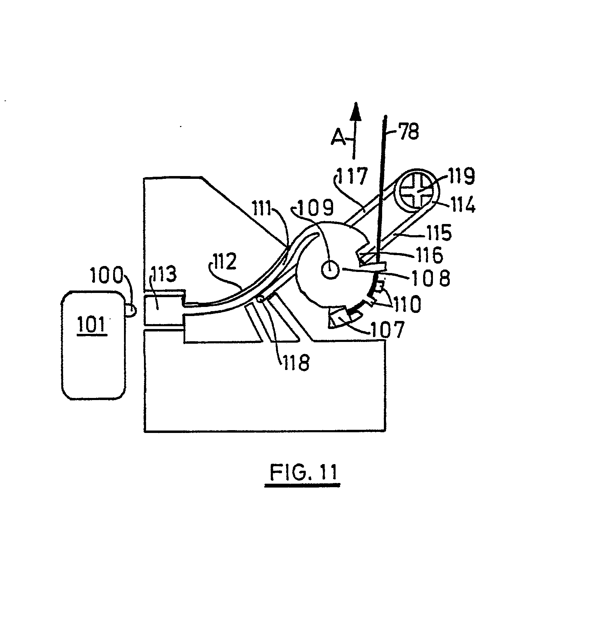

Bei der Ausführungsform nach Fig. 10 ist das Drahtseil 78, dessen beide Enden 79, 80 festgelegt sind, in einem mittleren Bereich, d.h. in einem Bereich zwischen zwei Drucktasten 81, über einen Drehschieber 102 geführt. Der Drehschieber weist zwei Rollen 103 auf, zwischen denen die Drehachse 104 des Drehschiebers angeordnet ist. Das Seil 78 ist über den Umfang der ersten Rolle 103 herumgeführt und anschließend über die gegenüberliegende Seite des Umfangs der zweiten Rolle 103. Der Drehschieber 102 ist nach unten hin verlängert und weist dort an seiner einen Seite einen abgerundeten Vorsprung 105 auf, der dem Schaltknopf 100 eines elektrischen Schalters 101 gegenüberliegend angeordnet ist. Eine Druckfeder 106 beaufschlagt den Drehschieber 102 in die dargestellte Stellung, in der Elektroschalter geöffnet ist. Wird eine der beiden schematisch dargestellten Drucktasten 81 betätigt, so wird das Drahtseil 78 ausgelenkt und sein Weg im mittleren bereich verkürzt. Dies führt zu einer Verdrehung des Drehschiebers 102 im Gegenuhrzeigersinn, so daß der Vorsprung 105 den Betätigungsknopf 100 des elektrischen Schalters 101 berührt und verschiebt. Auch hier kann die Geometrie so gewählt werden, daß nur eine Betätigung beider Drucktasten 81 zu einem Schließen des Schalters 101 führt.

Fig. 11 zeigt wieder eine Ausführungsform, bei der das Drahtseil im Bereich nur eines Endes festgelegt ist, während das andere dargestellte freie Ende 107 mit einem Drehschieber 108 verbunden ist. Der Drehschieber ist drehbar an einer Achse 109 gelagert. Die Festlegung des Drahtseils 78 geschieht in ähnlicher Weise durch auf beiden Seiten des Seils 78 angeordnete Vorsprünge 110 wie bei dem Kreisbogensegment 39 bei der Ausführungsform nach Fig. 3.

An dem Drehschieber 108 ist einstückig tangential ein Schubband 111 angeformt, das längs einer gebogenen Wand 112 nach außen geführt ist und einen verbreiterten Kopf 113 aufweist. Der Kopf 113 des Schubbandes 111 liegt dem Schaltknopf 100 eines elektrischen Schalters 101 gegenüber. In die dargestellte Ausgangsstellung ist der Drehschieber 108 durch eine Schenkelfeder 114 beaufschlagt, deren einer Schenkel 115 in einer Kerbe 116 des Drehschiebers 108 liegt. Die dargestellte Stellung ist durch das Anliegen des Kopfes 113 in seiner Ausnehmung begrenzt. Der zweite Schenkel 117 liegt mit seinem abgebogenen Ende 118 an dem Schubband 111 an und beaufschlagt dies gegen die gebogene Wand 112. Die Schenkelfeder 114 ist um einen im Querschnitt kreuzförmigen Zapfen 119 herumgewickelt.

Ein Zug des Seiles in Richtung des Pfeiles A führt zu einer Verdrehung des Drehschiebers 108 im Gegenuhrzeigersinn gegen die Wirkung der Schenkelfeder 114. Diese Drehung führt dazu, daß das Schubband 111 längs der Wand 112 geschoben wird und seinen Kopf 113 nach außen schiebt, der den Schaltknopf 100 betätigt. Eine zu große Verdrehung des Drehschiebers führt dazu, daß das Schubband 111 von der Wand 112 gegen Wirkung des zweiten Schenkels 117 der Schenkelfeder 114 abgehoben wird. Eine zu große Verschiebung führt also nicht zu einer Beschädigung des Schalters 101.

**Patentansprüche**

1. Motorisch betriebenes Gerät, insbesondere Heckenschere, Rasenmäher o. dgl., mit einem Griff (18, 75, 96), der mindestens teilweise als Hohlprofil (70) ausgebildet ist und ein in die Ausgangsstellung beaufschlagtes in das Hohlprofil seitlich einschiebbares Betätigungselement (24) aufweist, das über ein Verbindungselement mit einer Schalteinrichtung verbunden bzw. verbindbar ist, die bei dem Loslassen des Betätigungselementes (24) den Antrieb des Gerätes stillsetzt, dadurch kennzeichnet, daß das Verbindungselement ein mindestens teilweise durch das Hohlprofil (70) des Bügelgriffs (18) längs eines, vorzugsweise mindestens eine Biegung aufweisenden, Wegs geführtes in Richtung seiner Längsachse im wesentlichen auf Zug beanspruchtes, flexibles Zugelement ist, wobei der Verschiebungsweg des Betätigungselements(24) im wesentlichen senkrecht zur Längsachse des Zugelements im Bereich des Betätigungselementes (24) gerichtet ist, wodurch eine Auslenkung des Zugelementes im wesentlichen quer zu seiner Längsachse im Bereich des Betätigungselementes (24) und damit ein Zug in Richtung seiner Längsachse bewirkt wird.

2. Gerät nach Anspruch 1, dadurch gekennzeichnet, daß das Zugelement im Bereich seines einen Endes vorzugsweise im Innern des Griffs (18, 75, 96) festgelegt ist und im Bereich seines anderen Endes (48, IO7) auf die Schalteinrichtung einwirkt.

3. Gerät nach Anspruch I oder 2, dadurch gekennzeichnet, daß das Zugelement im Bereich seiner beiden Enden (79, 80) vorzugsweise im Innern des Griffs (I8, 75, 9O) festgelegt ist und in einem mittleren Bereich auf die Schalteinrichtung einwirkt.

4. Gerät nach einem der vorhergehenden Ansprüche, dadurch gekennzeichnet, daß das Zugelement auf einen mit der Schalteinrichtung zusammenwirkenden Drehschieber (IO2, IO8) einwirkt.

5. Gerät nach einem der vorhergehenden Ansprüche, dadurch gekennzeichnet, daß das Zugelement mit einem mittleren Bereich schlaufenartig um ein Betätigungselement für die Schalteinrichtung herumgeführt ist.

6. Gerät nach einem der vorhergehenden Ansprüche, dadurch gekennzeichnet, daß ein freies Ende (48) des Zugelementes oder ein mit diesem verbundenen Drehschieber (IO2, IO8) ein Druckstück aufweist, das auf ein Auslöseelement der Schalteinrichtung einwirkt.

7. Gerät nach einem der vorhergehenden Ansprüche, dadurch gekennzeichnet, daß das Zugelement durch eine im Inneren des Bügelprofils (7O) angeordnete Feder (47, 95, 99, II4) gespannt ist.

8. Gerät nach einem der vorhergehenden Ansprüche, dadurch gekennzeichnet, daß der Griff (I8) als ein mit dem Gehäuse (II) des Handgerätes verbindbares Bau teil ausgebildet ist, wobei ein durch das Zugelement bewegbares Element mit der im Gehäuse (II) des Handgeräts angeordneten Schalteinrichtung verbindbar ist.

9. Gerät nach einem der vorhergehenden Ansprüche, dadurch gekennzeichnet, daß mindesten zwei, vorzugsweise drei voneinander unabhängige Betätigungselemente (24) auf das Zugelement einwirken.

IO. Gerät nach einem der vorhergehenden Ansprüche, dadurch gekennzeichnet, daß das Betätigungselement (24) eine in das Griffprofil (7O) einschiebbare Taste (8I) ist, deren Verschiebungsweg im wesentlichen senkrecht zur Längsachse des Zugelementes in ihrem Bereich verläuft.

II. Gerät nach einem der vorhergehenden Ansprüche, dadurch gekennzeichnet, daß die Schalteinrichtung ein in Öffnungsstellung vorgespannter elektrischer Schalter (56, 77, IOI) ist.

I2. Gerät nach einem der vorhergehenden Ansprüche, dadurch gekennzeichnet, daß ein Betätigungsknopf (55, IOO) der Schalteinrichtung unmittelbar hinter einer Öffnung (53) des Gehäuses (II) angeordnet ist, durch die ein Druckstück des Zugelementes hindurchgreift.

I3. Gerät nach einem der vorhergehenden Ansprüche, dadurch gekennzeichnet, daß das Zugelement polygonartig im Hohlprofil geführt und an den jeweiligen Ecken vorzugsweise über mindestens teilweise ausgebildete Rollen (82, 84) umgelenkt ist.

I4. Gerät nach einem der vorhergehenden Ansprüche, dadurch gekennzeichnet, daß das Zugelement ein Seil (36, 78) ist, dessen eines Ende im Bügelprofil (7O) festgelegt ist, das tangential die jeweils innere Seite (37) des mindestens einen Betätigungselementes (24) berührt und dessen freies Ende mit einem Druckstift (43, II3) verbunden ist, wobei eine Feder (47, II4) das Seil (36, 78) gespannt hält.

I5. Gerät nach einem der vorhergehenden Ansprüche, dadurch gekennzeichnet, daß bei mehreren Betätigungselementen nur die Betätigung zweier Elemente die Schalteinrichtung betätigt.

**Claims**

1. Motor-driven apparatus, particularly a hedge cutter, lawnmower, etc., with a handle (18, 75, 96), which is at least partly constructed as a hollow profile (70) and has an operating member (24), laterally insertable into the hollow profile and urged into the starting position and which is connected or connectable by means of a connecting member to a switching mechanism which, on releasing the operating member 24, stops the drive for the apparatus, characterized in that the connecting member is a flexible tension member substantially tensioned in the direction of its longitudinal axis guided at least partly by the hollow profile (70) of the bow handle (18) along a path preferably having at least one bend and the displacement path of the operating member (24) is directed substantially at right angles to the longitudinal axis of the tension member in the vicinity of the operating member (24), so that there is a deflection of the tension member substantially at right angles to its longitudinal axis in the vicinity of the operating member (24) and therefore tension in the direction of its longitudinal axis.

2. Apparatus according to claim 1, characterized in that the tension member is fixed in the vicinity of its one end, preferably in the interior handle (18, 75, 96) and acts on the switching mechanism in the vicinity of its other end (48, 107).

3. Apparatus according to claims 1 or 2, characterized in that the tension member is fixed in the vicinity of its two ends (79, 80), preferably in the interior of handle (18, 75, 96) and acts on the switching mechanism in its central area.

4. Apparatus according to one of the preceding claims, characterized in that the tension member acts on a rotary slide (102, 108) cooperating with the switching mechanism.

5. Apparatus according to one of the preceding claims, characterized in that the tension member is passed with a central region in loop-like manner about an operating member for the switching mechanism.

6. Apparatus according to one of the preceding claims, characterized in that a free end (48) of the tension member or a rotary slide (102, 108) connected thereto has a pressure piece acting on a release element of the switching mechanism.

7. Apparatus according to one of the preceding claims, characterized in that the tension member is tensioned by a spring (47, 95, 99, 114) arranged in the interior of the bow profile (70).

8. Apparatus according to one of the preceding claims, characterized in that the handle (18) is constructed as a component connectable with the hand apparatus casing (11), an element movable by the tension member being connectable with the switching mechanism located in the hand apparatus casing (11).

9. Apparatus according to one of the preceding claims, characterized in that at least two and preferably three independent operating members (24) act on the tension member.

10. Apparatus according to one of the preceding claims, characterized in that the operating member (24) is a pushbutton (81) insertable into the handle profile (70) and whose displacement path is substantially at right angles to the longitudinal axis of the tension member in the vicinity thereof.

11. Apparatus according to one of the preceding claims, characterized in that the switching mechanism is an electric switch (56, 77, 101) pretensioned in the opening positon.

12. Apparatus according to one of the preceding claims, characterized in that an operating button (55, 100) of the switching mechanism is positioned directly behind an opening (53) of casing (11) through which passes a pressure piece of the tension member.

13. Apparatus according to one of the preceding claims, characterized in that the tension member is guided in polygon-like manner in the hollow profile and is diverted at the corners, preferably by means of at least partly constructed pulleys (82, 84).

14. Apparatus according to one of the preceding claims, characterized in that the tension member is a cable (36, 78), whose one end is fixed in the bow profile (70), which tangentially contacts the in each case inner side (37) of the at least one operating member (24) and whose free end is connected to a pressure pin (43, 113), a spring (47, 114) keeping the cable (36, 78) taut.

15. Apparatus according to one of the preceding claims, characterized in that in the case of several operating members, the switching mechanism is only operated through the operation of two members.

**Revendications**

1. Appareil motorisé, notamment taille-haies, tondeuse a gazon ou analogue, comportant une poignée (18, 75, 96) réalisée au moins en partie sous la forme d'un profilé creux (70) et possédant un élément d'actionnement (24), repoussé dans la position initiale, pouvant être inséré latéralement dans le profile creux et relié ou pouvant être relié, par l'intermédiaire d'un élément de liaison, à un dispositif de commutation, qui, lors du relâchement de l'élément d'actionnement (24), arrête le dispositif d'entraînement de l'appareil, caractérisé par le fait que l'élément de liaison est un élément flexible de traction, guidé au moins partiellement par le profilé creux (70) de la poignée en forme d'étrier (18) le long d'un trajet comportant de préférence au moins un coude et chargé essentiellement en traction dans la direction de son axe longitudinal, le trajet de déplacement de l'élément d'actionnement (24) étant sensiblement perpendiculaire à l'axe longitudinal de l'élément de traction dans la zone de l'élément d'actionnement (24), ce qui provoque une déviation de l'élément de traction sensiblement transversalement par rapport à son axe longitudinal dans la zone de l'élément d'actionnement (24) et, par conséquent, une traction dans la direction de son axe longitudinal.

2. Appareil selon la revendication 1, caractérisé en ce que l'élément de traction est fixé, au voisinage de l'une de ses extrémités, de préférence à l'intérieur de la poignée (18, 75, 96) et agit, au voisinage de son autre extrémité (48, 107), sur le dispositif de commutation.

3. Appareil selon la revendication 1 ou 2, caractérisé en ce que l'élément de traction est fixé, au voisinage de ses deux extrémités (79, 80) de préférence à l'intérieure de la poignée (18, 75, 90) et agit, dans une zone médiane, sur le dispositif de commutation.

4. Appareil selon l'une des revendications précédentes, caractérisé en ce que l'élément de traction agit sur un curseur rotatif (102, 108) coopérant avec le dispositif de commutation.

5. Appareil selon l'une des revendications précédentes, caractérisé en ce que l'élément de traction en forme de boucle entoure, , par sa partie médiane, un élément d'actionnement du dispositif de commutation.

6. Appareil selon l'une des revendications précédentes, caractérisé en ce qu'une extrémité libre (48) de l'élément de traction ou un curseur rotatif (102, 108), relié à cet élément comporte un organe de compression qui agit sur un élément de déclenchement du dispositif de commutation.

7. Appareil selon l'une des revendications précédentes, caractérisé en ce que l'élément de traction est tendu par un ressort (47, 95, 99, 114), disposé à l'intérieur du profilé (70) de l'étrier.

8. Appareil selon l'une des revendications précédentes, caractérisé en ce que la poignée (18) est réalisée sous la forme d'un composant pouvant être relie au carter (11) de l'appareil manuel, un élément déplaçable par l'élément de traction pouvant être relié au dispositif de commutation disposé dans le carter (11).

9. Appareil selon l'une des revendications précédentes, caractérisé en ce qu'au moins deux et de préférence trois éléments d'actionnement indépendants (24) agissent sur l'élément de traction.

10. Appareil selon l'une des revendications précédentes, caractérisé en ce que l'élément d'actionnement (24) est une touche (81), pouvant être enfoncée dans le profile (70) de la poignée et dont le trajet de déplacement est sensiblement perpendiculaire à l'axe longitudinal de l'élément de traction au voisinage de cette touche.

11. Appareil selon l'une des revendications précédentes, caractérisé en ce que le dispositif de commutation est un interrupteur électrique (56, 77, 101) précontraint dans la position ouverte.

12. Appareil selon l'une des revendications précédentes, caractérisé en ce qu'un bouton d'actionnement (55, 100) du dispositif de commutation est disposé directement en arrière d'une ouverture (53) du carter (11), que traverse un organe de compression de l'élément de traction.

13. Appareil selon l'une des revendications précédentes, caractérisé en ce que l'élément de traction s'étend avec une configuration polygonale dans le profilé creux et est dévié, au niveau des angles respectifs, de préférence par l'intermédiaire d'éléments (82, 84) agencés au moins partiellement sous la forme de galets.

14. Appareil selon l'une des revendications précédentes, caractérisé en ce que l'élément de traction est un câble (36, 78), dont une extrémité est fixée au profilé (70) de l'étrier et s'applique tangentiellement contre le côte intérieur respectif (37) d'au moins un élément d'actionnement (24) et dont l'extrémité libre est reliée à un poussoir (43, 113), un ressort (47, 114) maintenant le câble (36, 78) tendu.

15. Appareil selon l'une des revendications précédentes, caractérisé en ce que, dans le cas de plusieurs éléments d'actionnement, seul l'actionnement de deux éléments active le dispositif de commutation.

FIG.1

EP 0 214 455 B1

<u>FIG.2</u>

EP 0 214 455 B1

FIG. 3

FIG.4

**FIG. 5**

**FIG. 6**

FIG. 7

FIG. 8

FIG. 9

FIG. 10

EP 0 214 455 B1

FIG. 11